(19) Europäisches Patentamt
European Patent Office
Office européen des brevets

(11) **EP 4 765 667 A1**

(12) **EUROPEAN PATENT APPLICATION**
published in accordance with Art. 153(4) EPC

(43) Date of publication:
**24.06.2026 Bulletin 2026/26**

(21) Application number: **24899506.0**

(22) Date of filing: **24.10.2024**

(51) International Patent Classification (IPC):
***H04B 7/06*** (2006.01)

(86) International application number:
**PCT/CN2024/127169**

(87) International publication number:
**WO 2025/118863 (12.06.2025 Gazette 2025/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.12.2023 CN 202311651708**

(71) Applicant: **Shanghai Satellite Network Research Institute Co., Ltd.
Shanghai 201204 (CN)**

(72) Inventors:
• **SUN, Jianfeng**
Shanghai 201204 (CN)
• **XU, Xiaofan**
Shanghai 201204 (CN)
• **LAO, Chenzhe**
Shanghai 201204 (CN)
• **XU, Qian**
Shanghai 201204 (CN)

(74) Representative: **Patentwerk B.V.**
P.O. Box 1514
5200 BN 's-Hertogenbosch (NL)

(54) **PHASED ARRAY ELEMENT PROCESSING METHOD AND DEVICE**

(57) Disclosed are a method and an apparatus for processing a phased array element, which relate to the technical field of satellite communications. Communication configuration data of a phased array, which corresponds to a communication distance between a first laser communication terminal and a second laser communication terminal is determined on the basis of a corresponding relationship between the communication distance and the communication configuration data of the phased array; a first deflection angle of each of at least one phased array element is acquired; a transmission gain of the phased array is determined on the basis of the communication configuration data of the phased array and the first deflection angle of each of the at least one phased array element; and the first deflection angle of each of the at least one phased array element is adjusted on the basis of a result of comparing the transmission gain of the phased array with a preset transmission gain threshold in the communication configuration data, to obtain a second deflection angle of each of the at least one phased array element. The present disclosure avoids the problem that the transmission gain is lower than a preset transmission gain threshold at the junctions in a case where a plurality of phased arrays are directly spliced.

Fig. 3

determining communication configuration data of a phased array, which corresponds to a communication distance between a first laser communication terminal and a second laser communication terminal, on the basis of a corresponding relationship between the communication distance and the communication configuration data of the phased array — 301

acquiring a first deflection angle of each of at least one phased array element — 302

determining a transmission gain of the phased array on the basis of the communication configuration data of the phased array and the first deflection angle of each of the at least one phased array element — 303

adjusting the first deflection angle of each of the at least one phased array element on the basis of a result of comparing the transmission gain of the phased array with a preset transmission gain threshold in the communication configuration data, to obtain a second deflection angle of each of the at least one phased array element — 304

**EP 4 765 667 A1**

## Description

### Cross-Reference to Related Application

The present disclosure claims priority to Chinese Patent Application No. 202311651708.9, filed with China National Intellectual Property Administration on 04 December 2023, and entitled " Method and Apparatus for Processing Phased Array Element", which is incorporated herein by reference in its entirety.

### Technical Field

The present disclosure relates to the technical field of satellite communications, and in particular, to a method and an apparatus for processing a phased array element.

### Background

With the development of satellite Internet technology, a demand for cross-network connection is proposed for satellite laser communication terminals. This demand differs from traditional point-to-point communication links in that it requires a wider range of both transmission gain and field of view for the antenna (phased array) during cross-network link establishment.

The transmission field of view and the transmission gain of a conventional laser antenna are determined at the design stage, and may not be changed during in-orbit operation. However, a shorter communication distance requires a lower transmission gain and a larger field of view, while a longer communication distance requires a higher transmission gain and a smaller field of view. Consequently, if the phased array elements are connected according to the maximum transmission gain and field of view during design, it would result in a tremendous waste of resources.

In the related art, a plurality of phased arrays having different fields of view are directly spliced to adjust the transmission gain and the transmission field of view. However, directly splicing a plurality of phased arrays having different fields of view requires consumption of a considerable number of phased array elements, and the problem that the transmission gain is obviously lower than the transmission gain of the phased arrays occurs at the junctions of the plurality of phased arrays.

Therefore, there is an urgent need to provide a method for processing a phased array element, which solves the problem that the transmission gain is obviously lower than a preset transmission gain threshold of the phased arrays at the junctions in a case where a plurality of phased arrays are directly spliced.

### Summary

The present disclosure provides a method and an apparatus for processing a phased array element, which are used for solving the problem that the transmission gain is obviously lower than a preset transmission gain threshold of the phased arrays at the junctions in a case where a plurality of phased arrays are directly spliced.

According to a first aspect, the embodiments of the present disclosure provide a method for processing a phased array element, which is applied to a first laser communication terminal. The first laser communication terminal includes a phased array formed by at least one phased array element, and the first laser communication terminal is configured to communicate with a second laser communication terminal. The method includes: determining communication configuration data of the phased array, which corresponds to a communication distance between the first laser communication terminal and the second laser communication terminal, on the basis of a corresponding relationship between the communication distance and the communication configuration data of the phased array; acquiring a first deflection angle of each of the at least one phased array element; determining a transmission gain of the phased array on the basis of the communication configuration data of the phased array and the first deflection angle of each of the at least one phased array element; and adjusting the first deflection angle of each of the at least one phased array element on the basis of a result of comparing the transmission gain of the phased array with a preset transmission gain threshold in the communication configuration data, to obtain a second deflection angle of each of the at least one phased array element.

In one or more embodiments, the communication configuration data includes a first field of view of the phased array; the first field of view represents a scanning range of the phased array; the scanning range includes a plurality of scanning angles; the step of determining a transmission gain of the phased array on the basis of the communication configuration data of the phased array and the first deflection angle of each of the at least one phased array element includes: for any one scanning angle of the plurality of scanning angles: determining a transmission gain of the phased array on the basis of the communication configuration data of the phased array and the first deflection angle of each of the at least one phased array element.

In one or more embodiments, the step of adjusting the first deflection angle of each of the at least one phased array element on the basis of a result of comparing the transmission gain of the phased array with a preset transmission gain threshold in the communication configuration data, to obtain a second deflection angle of each of the at least one phased array element includes: for any one scanning angle of the plurality of scanning angles: in a case where the transmission gain of the phased array is less than the preset transmission gain threshold, for each phased array element of the at least one phased array element, adjusting the first deflection angle of the phased array element according to a preset adjustment policy to obtain the second deflection angle of the phased array element; the preset transmission gain threshold corresponds to the first field of view; and in a case where the transmission gain of the phased array is not less than the preset transmission gain threshold, for each phased array element of the at least one phased array element, taking the first deflection angle of the phased array element as the second deflection angle of the phased array element.

In one or more embodiments, the communication configuration data further includes a beam deflection range of each of the at least one phased array element, a transmission efficiency of the phased array, a number of phased array elements, and a communication wavelength of the phased array; the step of determining a transmission gain of the phased array on the basis of the communication configuration data of the phased array and the first deflection angle of each of the at least one phased array element includes: for each phased array element of the at least one phased array element, determining a second field of view of the phased array element on the basis of the beam deflection range of the phased array element and the first deflection angle of the phased array element; the second field of view of the phased array element represents a scanning range of the phased array element; for each phased array element of the at least one phased array element, determining an effective area of the phased array element on the basis of the scanning angle and the second field of view of the phased array element; and determining the transmission gain of the phased array on the basis of the transmission efficiency of the phased array, the number of the phased array elements, the communication wavelength of the phased array, and the effective area of each of the at least one phased array element.

In one or more embodiments, the communication configuration data further includes a beam incident angle of each of the at least one phased array element; the step of for each phased array element of the at least one phased array element, determining an effective area of the phased array element on the basis of the scanning angle and the second field of view of the phased array element includes: for any one phased array element of the at least one phased array element: in a case where the scanning angle is not within the second field of view of the phased array element, determining the effective area of the phased array element to a preset value; in a case where the scanning angle is within the second field of view of the phased array element, acquiring a beam incident angle of the phased array element; and determining the effective area of the phased array element on the basis of the scanning angle, the beam incident angle of the phased array element, and the first deflection angle of the phased array element.

In one or more embodiments, the communication configuration data further includes an area of each of the at least one phased array element; the step of the determining an effective area of the phased array element on the basis of the scanning angle, the beam incident angle of the phased array element, and the first deflection angle of the phased array element includes: $S_n = S * \cos\left(\frac{(\theta_x - d\theta_{x\_n})}{2} + \theta_{sx}\right) * \cos\left(\frac{(\theta_y - d\theta_{y\_n})}{2} + \theta_{sy}\right)$ .

Wherein $S_n$ is the effective area of the phased array element; S is the area of the phased array element; $\theta_x$ is a scanning angle in an X direction, $\theta_y$ is a scanning angle in a Y direction; $d\theta_{x\text{-}n}$ is a first deflection angle of the phased array element in the X direction, $d\theta_{x\text{-}n}$ is a first deflection angle of the phased array element in the Y direction; and $\theta_{sx}$ is a beam incident angle of the phased array element in the X direction, $\theta_{sy}$ is a beam incident angle of the phased array element in the Y direction.

In one or more embodiments, before the step that a transmission gain of the phased array is determined on the basis of the communication configuration data of the phased array and the first deflection angle of each of the at least one phased array element, the method further includes: determining an initial deflection angle of each of the at least one phased array element on the basis of the first field of view and a number of the at least one phased array element; and taking the initial deflection angle as a first deflection angle for a first adjustment.

In one or more embodiments, the step of determining an initial deflection angle of each of the at least one phased array element on the basis of the first field of view and a number of the at least one phased array element includes: acquiring a preset tolerance value in the communication configuration data; and equally dividing the scanning range on the basis of the number of the at least one phased array element and the preset tolerance value, to obtain the initial deflection angle of each of the at least one phased array element.

According to a second aspect, the embodiments of the present disclosure provide an apparatus for processing a phased array element. The apparatus is provided in a first laser communication terminal, the first laser communication terminal includes a phased array formed by at least one phased array element, and the first laser communication terminal is configured to communicate with a second laser communication terminal. The apparatus includes: a first acquisition module, configured to determine communication configuration data of the phased array, which corresponds to a communication distance between the first laser communication terminal and the second laser communication terminal, on the basis of a corresponding relationship between the communication distance and the communication configuration data of the phased array; a second acquisition module, configured to acquire a first deflection angle of each of the at least one phased array element; a transmission gain determination module, configured to determine a transmission gain of the phased array on the basis of the communication configuration data of the phased array and the first deflection angle of each of the at least one phased array element; and a deflection angle adjustment module, configured to adjust the first deflection angle of each of the at least one phased array element on the basis of a result of comparing the transmission gain of the phased array with a preset transmission gain threshold in the communication configuration data, to obtain a second deflection angle of each of the at least one phased array element.

According to a third aspect, the embodiments of the present disclosure further provide an electronic device. The electronic device includes: a memory and a processor; the memory is configured to store a program instruction; and the processor is configured to invoke the program instruction stored in the memory, and execute the method for processing a phased array element according to the first aspect according to the program instruction.

According to a fourth aspect, the embodiments of the present disclosure further provide a computer-readable storage medium. The computer-readable storage medium stores a computer instruction which, when executed on a computer, causes the computer to execute the method for processing a phased array element according to the first aspect.

The beneficial effects of the embodiments of the present disclosure are as follows: in the embodiments of the present disclosure, determining communication configuration data of a phased array, which corresponds to a communication distance between a first laser communication terminal and a second laser communication terminal on the basis of a corresponding relationship between the communication distance and the communication configuration data of the phased array; acquiring a first deflection angle of each of at least one phased array element; determining a transmission gain of the phased array on the basis of the communication configuration data of the phased array and the first deflection angle of each of the at least one phased array element; and adjusting the first deflection angle of each of the at least one phased array element on the basis of a result of comparing the transmission gain of the phased array with a preset transmission gain threshold in the communication configuration data, to obtain a second deflection angle of each of the at least one phased array element.

Thus, by adjusting the deflection angles of the phased array elements, instead of directly splicing a plurality of phased arrays having different fields of view, the present disclosure not only reduces the number of phased array elements to be used but also enables continuous adjustment of the deflection angles, allowing the transmission gain and the field of view of the phased arrays to achieve an optimal effect, thereby avoiding the problem that the transmission gain is obviously lower than a preset transmission gain threshold of the phased arrays at the junctions in a case where a plurality of phased arrays are directly spliced.

Additional features and advantages of the present disclosure will be set forth in the description that follows, and in part will be obvious from the description, or may be learned by practice of the disclosure. The objectives and other advantages of the present disclosure may be realized and attained by means of the structures particularly pointed out in the written description, claims, and drawings.

## Brief Description of the Drawings

To describe the technical solutions in the embodiments of the present disclosure more clearly, the following briefly introduces the drawings required for describing the embodiments of the present disclosure. Apparently, the drawings in the following description show merely some embodiments of the present disclosure.

Fig. 1 is a schematic diagram where a plurality of phased arrays are directly spliced according to an embodiment of the present disclosure.

Fig. 2 is a schematic diagram of a phased array laser communication system according to an embodiment of the present disclosure.

Fig. 3 is a schematic flowchart of a method for processing a phased array element according to an embodiment of the present disclosure.

Fig. 4 is a schematic flowchart of determining a transmission gain according to an embodiment of the present disclosure.

Fig. 5 is a schematic diagram of a phased array according to an embodiment of the present disclosure.

Fig. 6 is a schematic diagram of a transmission gain across all scanning angles within a field of view for two splicing modes according to an embodiment of the present disclosure.

Fig. 7 is a schematic diagram of a transmission gain across all scanning angles within a field of view for two communication distances according to an embodiment of the present disclosure.

Fig. 8 is a schematic structural diagram of an apparatus for processing a phased array element according to an embodiment of the present disclosure.

Fig. 9 is a schematic structural diagram of an electronic device according to an embodiment of the present disclosure.

**Detailed Description of the Embodiments**

To make the objectives, technical solutions, and advantages of the embodiments of the present disclosure clearer, the following clearly and completely describes the technical solutions in the embodiments of the present disclosure with reference to the drawings in the embodiments of the present disclosure. The embodiments described herein are some rather than all of the embodiments of the present disclosure. All other embodiments obtained by a person of ordinary skill in the art based on the embodiments of the present disclosure without inventive efforts shall belong to the scope of protection of the present disclosure.

Furthermore, in the description of the embodiments of the present disclosure, "/" denotes or, unless otherwise stated. For example, A/B may represent A or B; "and/or" in the text is merely an association relationship for describing associated objects, and represents that three relationships may exist. For example, A and/or B may represent three cases: A exists alone, A and B exist simultaneously, and B exists alone. In addition, "a plurality of" in the description of the embodiments of the present disclosure refers to two or more.

A phased array is a phase compensated (or delay compensated) array, which may be used for both reception and transmission. The working principle thereof is to apply appropriate phase shifts (or delays) to signals of phased array elements arranged in a certain pattern to obtain deflection of an array beam, and perform phase (or delay) compensation at different orientations at the same time so as to obtain multiple beams. The advantage thereof is that electronic scanning of a beam may be realized within a spatial range (a field of view) to be observed without mechanically rotating a phased array, which is very convenient and flexible.

With the development of satellite Internet technology, a demand for cross-network connection is proposed for satellite laser communication terminals. This demand differs from traditional point-to-point communication links in that it requires a wider range of both transmission gain and field of view for the antenna (phased array) during cross-network link establishment.

The transmission field of view and the transmission gain of a conventional laser antenna are determined during design, and may not be changed during on-orbit operation. However, a shorter communication distance requires a lower transmission gain and a larger field of view, while a longer communication distance requires a higher transmission gain and a smaller field of view. Consequently, if the phased array elements are connected according to the maximum transmission gain and field of view during design, it would result in a tremendous waste of resources.

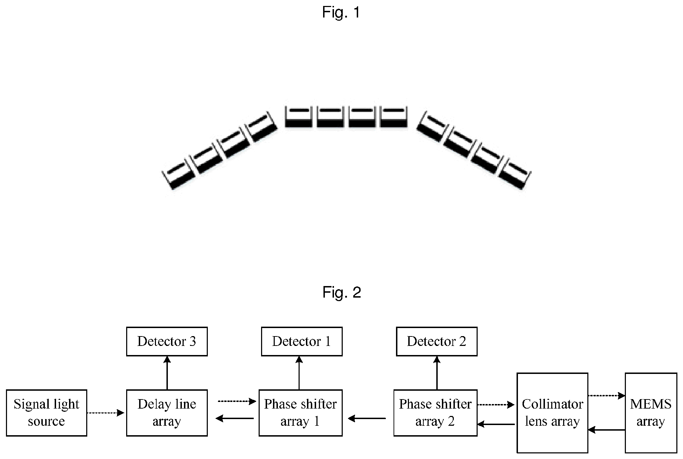

In the related art, as shown in Fig. 1, a plurality of phased arrays having different fields of view are directly spliced to adjust the transmission gain and the transmission field of view. However, directly splicing a plurality of phased arrays having different fields of view requires consumption of a considerable number of phased array elements, and the problem that the transmission gain is obviously lower than the transmission gain of the phased arrays occurs at the junctions of the plurality of phased arrays.

Therefore, there is an urgent need to provide a method for processing a phased array element, which solves the problem that the transmission gain is obviously lower than a preset transmission gain threshold of the phased arrays at the junctions in a case where a plurality of phased arrays are directly spliced.

In view of this, the present disclosure provides a method and an apparatus for processing a phased array element, which are used for solving the problem that the transmission gain is obviously lower than the transmission gain of the phased arrays at the junctions in a case where a plurality of phased arrays are directly spliced.

In order to facilitate understanding of the technical solutions provided in the present disclosure, the phased array laser communication system will be described first. As shown in Fig. 2, a Micro-Electro-Mechanical System (MEMS) array is taken as an example of a phased array, and a MEMS-based optical phased array laser communication system is composed of a signal light source, a delay line array, a phase shifter array, a collimator lens array, a MEMS array, and detectors. The signal light source generates optical carrier signals of information, and delay processing is performed by means of the delay line array, so as to ensure the consistency of delay of the optical carrier signals; then the optical carrier signals which have been subjected to delay processing are sent to the phase shifter array 1 and the phase shifter array 2 to control the phase of each optical carrier signal by means of the phase shifter array 1 and the phase shifter array 2; and then each optical carrier signal is formed into a beam by means of the collimator lens array to be transmitted to the MEMS array to adjust the orientation of each beam. The detector 1 is configured to detect optical power and feed back the optical power to the phase shifter array 1 in real time, and the detector 2 is configured to detect optical power and feed back the optical power to the phase shifter array 2 in real time. The detector 3 is configured to perform optical signal conversion on a received signal.

The phased array in the embodiments of the present disclosure is configured to receive an optical signal, perform phase compensation on the optical signal, and adjust the orientation of each beam.

To further illustrate the technical solutions provided in the embodiments of the present disclosure, the following describes the technical solutions in detail with reference to the drawings and specific implementations. Although the embodiments of the present disclosure provide method operational steps as described in the following embodiments or illustrated in the drawings, more or less operational steps may be included in the methods based on conventional or non-inventive labor. For steps having no necessary causal relation in logic, the execution order of the steps is not limited to the execution order provided in the embodiments of the present disclosure.

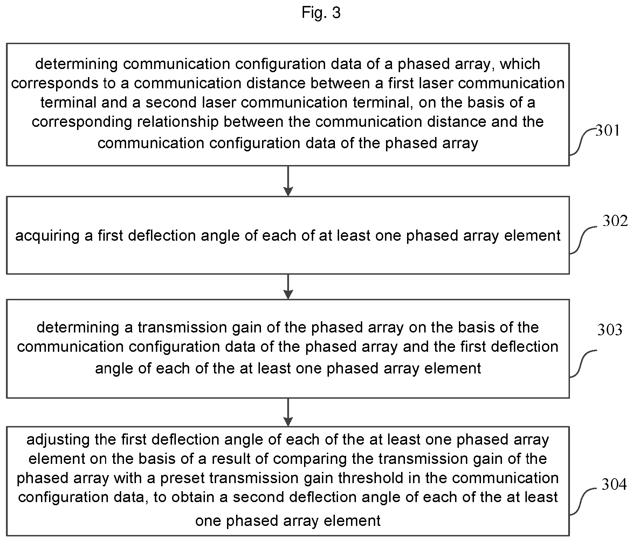

Fig. 3 is a schematic flowchart of a method for processing a phased array element according to an embodiment of the present disclosure. The processing method for a phased array element provided in the embodiments of the present disclosure is applied to a first laser communication terminal. The first laser communication terminal includes a phased array formed by at least one phased array element, and the first laser communication terminal is configured to communicate with a second laser communication terminal. As shown in Fig. 3, the method includes the following steps.

In step 301, determining communication configuration data of a phased array, which corresponds to a communication distance between a first laser communication terminal and a second laser communication terminal, on the basis of a corresponding relationship between the communication distance and the communication configuration data of the phased array.

The first laser communication terminal and the second laser communication terminal are located on two different satellites.

In the embodiments of the present disclosure, the corresponding relationship between the communication distance and the communication configuration data of the phased array may be pre-configured according to experience or actual needs, and the embodiments of the present disclosure are not limited thereto.

Exemplarily, the communication configuration data includes a first field of view of the phased array; in a case where the first laser communication terminal is located on a satellite A and the second laser communication terminal is located on a satellite B, and in a case where the communication distance between the satellite A and the satellite B is 500 km, according to the corresponding relationship between the communication distance and the communication configuration data, it may be determined that the first field of view of the phased array of the first laser communication terminal is $\pm 61°$ in an X direction and $\pm 20°$ in a Y direction at this time; in a case where the communication distance between the satellite A and the satellite B is 2000 km, according to the corresponding relationship between the communication distance and the communication configuration data, it may be determined that the first field of view of the phased array of the first laser communication terminal is $\pm 28°$ in the X direction and $\pm 20°$ in the Y direction at this time.

In step 302, acquiring a first deflection angle of each of at least one phased array element.

During a first adjustment, the first deflection angle is an initial deflection angle of each of the at least one phased array element; during a non-first adjustment, the first deflection angle is the deflection angle of each of the at least one phased array element after the previous adjustment.

In step 303, determining a transmission gain of the phased array on the basis of the communication configuration data of the phased array and the first deflection angle of each of the at least one phased array element.

In one or more embodiments, the communication configuration data includes a first field of view of the phased array; the first field of view represents a scanning range of the phased array; the scanning range includes a plurality of scanning angles.

The step of determining a transmission gain of the phased array on the basis of the communication configuration data of the phased array and the first deflection angle of each of the at least one phased array element may be performed as follows: for any one scanning angle of the plurality of scanning angles: determining a transmission gain of the phased array on the basis of the communication configuration data of the phased array and the first deflection angle of each of the at least one phased array element.

In one or more embodiments, the communication configuration data further includes a beam deflection range of each of the at least one phased array element, a transmission efficiency of the phased array, a number of phased array elements, and a communication wavelength of the phased array.

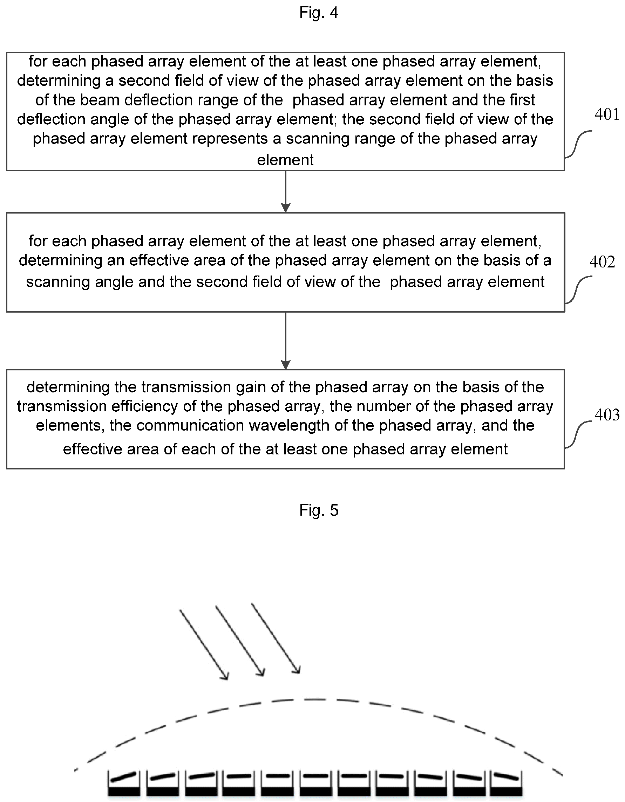

Therefore, the step of determining a transmission gain of the phased array on the basis of the communication configuration data of the phased array and the first deflection angle of each of the at least one phased array element may be performed as the steps shown in Fig. 4.

In step 401, for each phased array element of the at least one phased array element, determining a second field of view of the phased array element on the basis of the beam deflection range of the phased array element and the first deflection angle of the phased array element; the second field of view of the phased array element represents a scanning range of the phased array element.

Exemplarily, assuming that the beam deflection range corresponding to a phased array element is $[\theta_{x\_a}, \theta_{x\_b}]$ and

$[\theta_{y\_a}, [\theta_{x\_b}]$, and the first deflection angle is $d\theta_{x\_n}, d\theta_{xy\_n}$, then the second field of view of the phased array element is $[\theta_{x\_a} + d\theta_{x\_n}, \theta_{x\_b} + d\theta_{x\_n}]$ and $[\theta_{y\_a} + d\theta_{y\_n}, \theta_{y\_b} + d\theta_{y\_n}]$.

In step 402, for each phased array element of the at least one phased array element, determining an effective area of the phased array element on the basis of a scanning angle and the second field of view of the phased array element.

In one or more embodiments, the communication configuration data further includes a beam incident angle of each of the at least one phased array element. Therefore, step 402 of for each phased array element of the at least one phased array element, determining an effective area of the phased array element on the basis of the scanning angle and the second field of view of the phased array element may be specifically performed as follows.

For any one phased array element of the at least one phased array element: in a case where the scanning angle is not within the second field of view of the phased array element, determining the effective area of the phased array element to a preset value; in a case where the scanning angle is within the second field of view of the phased array element, acquiring a beam incident angle of the phased array element; and determining the effective area of the phased array element on the basis of the scanning angle, the beam incident angle of the phased array element, and the first deflection angle of the phased array element.

In one or more embodiments, the communication configuration data further includes an area of each of the at least one phased array element; therefore, in the embodiments of the present disclosure, the step of determining an effective area of the phased array element on the basis of the scanning angle, the beam incident angle of the phased array element, and the first deflection angle of the phased array element may be specifically performed as formula (1).

$$S_n = S * \cos\left(\frac{(\theta_x - d\theta_{x\_n})}{2} + \theta_{sx}\right) * \cos\left(\frac{(\theta_y - d\theta_{y\_n})}{2} + \theta_{sy}\right)(1)$$

Wherein $S_n$ is the effective area of the phased array element; S is the area of the phased array element; $\theta_x$ is a scanning angle in an X direction, $\theta_y$, is a scanning angle in a Y direction; $d\theta_{x\text{-}n}$ is a first deflection angle of the phased array element in the X direction, $d\theta_{x\text{-}n}$ is a first deflection angle of the phased array element in the Y direction; and $\theta_{sx}$ is a beam incident angle of the phased array element in the X direction, $\theta_{sy}$ is a beam incident angle of the phased array element in the Y direction.

Exemplarily, assuming that the beam deflection range corresponding to a phased array element is $[\theta_{x\_a}, \theta_{x\_b}]$, and $[\theta_{y\_a}, \theta_{y\_b}]$, and the first deflection angle is $[d\theta_{x\_n}, \theta_{y\_n}]$, then the second field of view of the phased array element is $[\theta_{x\_a} + d\theta_{x\_n}, \theta_{x\_b} + d\theta_{x\_n}]$, and $[\theta_{y\_a} + d\theta_{y\_n}, \theta_{y\_b} + d\theta_{y\_n}]$, and at this time, for any one scanning angle $\theta_x$ and $\theta_y$ of the first field of view of the phased array, the effective area of the phased array element is:

$$S_n = \begin{cases} S \cdot \cos\left(\left(\theta_x - d\theta_{x\_n}\right)/2 + \theta_{Sx}\right) \cdot \cos\left(\left(\theta_y - d\theta_{y\_n}\right)/2 + \theta_{Sy}\right) & \begin{aligned} \theta_x &\in \left[\theta_{x\_a} + d\theta_{x\_n}, \theta_{x\_b} + d\theta_{x\_n}\right] \\ \theta_y &\in \left[\theta_{y\_a} + d\theta_{y\_n}, \theta_{y\_b} + d\theta_{y\_n}\right] \end{aligned} \\ 0 & \text{other} \end{cases}$$

. Wherein $S_n$ is the effective area of the phased array element; S is the area of the phased array element; $\theta_x$ is a scanning angle in the X direction, $\theta_y$ is a scanning angle in the Y direction; $d\theta_{x\text{-}n}$ is a first deflection angle of the phased array element in the X direction, $d\theta_{x\text{-}n}$ is a first deflection angle of the phased array element in the Y direction; and $\theta_{sx}$ is a beam incident angle of the phased array element in the X direction, $\theta_{sy}$ is a beam incident angle of the phased array element in the Y direction.

The preset value in the embodiments of the present disclosure may be set according to experience or be set according to actual needs, for example, the preset value is set to **0. in a case** where the scanning angle is not within the second field of view of the phased array element, the effective area of the phased array element is 0.

In step 403, determining the transmission gain of the phased array on the basis of the transmission efficiency of the phased array, the number of the phased array elements, the communication wavelength of the phased array, and the effective area of each of the at least one phased array element.

Exemplarily, assuming that the beam deflection range corresponding to a phased array element is $[\theta_{x\_a}, \theta_{x\_b}]$ and $[\theta_{y\_a}, \theta_{y\_b}]$, and the first deflection angle is $[s\theta_{x\_n}, s\theta_{y\_n}]$, then the second field of view of the phased array element is $[\theta_{x\_a} + d\theta_{x\_n}, \theta_{x\_b} + d\theta_{x\_n}]$ and $[\theta_{y\_a} + d\theta_{y\_n}, \theta_{y\_b} + d\theta_{y\_n}]$, and at this time, for any one scanning angle $\theta_x$, $\theta_y$ of the first field of view of the phased array, the far-field power density is calculated according to the following formula (2).

$$P_{far\_field} = \left\{ \sum_{n=0}^{N} \sqrt{\frac{\eta p_t}{N} \cdot \frac{1}{\pi \cdot \left(z \cdot \theta_{div}/2\right)^2}} \right\}^2 = \frac{\eta \cdot p_t}{N \cdot \lambda^2 \cdot z^2} \left( \sum_{n=0}^{N} \sqrt{\pi d^2/4} \right)^2$$

$$= \frac{\eta \cdot p_t}{N \cdot \lambda^2 \cdot z^2} \left( \sum_{n=0}^{N} \sqrt{S_n} \right)^2 \qquad (2)$$

Wherein $\eta$ is a transmission efficiency of the phased array, $N$ is a number of phased array elements, $S_n$ is an effective area of the phased array element, $z$ is a communication distance between the first laser communication terminal and the second laser communication terminal, $P_t$ is a total transmission power of the phased array, $\lambda$ is a communication wavelength of the phased array, $\theta_{div}$ is a divergence angle of the phased array, $\theta_{div} = \dfrac{4\lambda}{\pi d}$ , wherein d is a diameter of each of the at least one phased array element.

In the embodiments of the present disclosure, $\dfrac{P_t}{z^2} = 4\pi$ , and therefore the transmission gain of the phased array in the embodiments of the present disclosure may be calculated through formula (3).

$$G_T = \frac{4\pi\eta}{N \cdot \lambda^2} \left( \sum_{n=0}^{N} \sqrt{S_n} \right)^2 \qquad (3)$$

Wherein $\eta$ is a transmission efficiency of the phased array, $N$ is a number of phased array elements, $S_n$ is an effective area of the phased array element, and $\lambda$ is a communication wavelength of the phased array.

In step 304, adjusting the first deflection angle of each of the at least one phased array element on the basis of a result of comparing the transmission gain of the phased array with a preset transmission gain threshold in the communication configuration data, to obtain a second deflection angle of each of the at least one phased array element.

In one or more embodiments, the step of adjusting the first deflection angle of each of the at least one phased array element on the basis of a result of comparing the transmission gain of the phased array with a preset transmission gain threshold in the communication configuration data, to obtain a second deflection angle of each of the at least one phased array element may be performed as follows.

For any one scanning angle of the plurality of scanning angles: in a case where the transmission gain of the phased array is less than the preset transmission gain threshold, for each phased array element of the at least one phased array element, adjusting the first deflection angle of the phased array element according to a preset adjustment policy to obtain the second deflection angle of the phased array element; the preset transmission gain threshold corresponds to the first field of view; and in a case where the transmission gain of the phased array is not less than the preset transmission gain threshold, for each phased array element of the at least one phased array element, taking the first deflection angle of the phased array element as the second deflection angle of the phased array element.

The pre-adjustment policy in the embodiments of the present disclosure may be set according to experience, and may also be set according to actual needs, which is not limited in the embodiments of the present disclosure. For example, the deflection angle may be adjusted by one scanning angle at a time within the scanning range, for example, the first deflection angle is 30°, the adjusted deflection angle is 31°, and the re-adjusted deflection angle is 32°; alternatively, the deflection angle may be adjusted by two scanning angles at a time, for example, the first deflection angle is 30°, the adjusted deflection angle is 32°, and the re-adjusted deflection angle is 34°.

In one or more embodiments, in order to reduce the number of adjustments to the deflection angle, before the step of determining a transmission gain of the phased array on the basis of the communication configuration data of the phased array and the first deflection angle of each of the at least one phased array element, the following operations may be further performed: determining an initial deflection angle of each of the at least one phased array element on the basis of the first field of view and a number of the at least one phased array element; and taking the initial deflection angle as a first deflection angle for a first adjustment.

Thus, by determining an initial deflection angle of each of the at least one phased array element, and then adjusting the first deflection angle multiple times on the basis of the initial deflection angle, the number of adjustments to the deflection angle is greatly reduced.

In one or more embodiments, the step of determining an initial deflection angle of each of the at least one phased array element on the basis of the first field of view and a number of the at least one phased array element may be performed as follows: acquiring a preset tolerance value in the communication configuration data; and equally dividing the scanning range on the basis of the number of the at least one phased array element and the preset tolerance value, to obtain the initial deflection angle of each of the at least one phased array element.

The preset tolerance value in the embodiments of the present disclosure may be set according to experience, and may also be set according to actual needs, which is not limited in the embodiments of the present disclosure.

Thus, by means of the method for processing a phased array element provided in the embodiments of the present disclosure, the first deflection angle of the phased array element is adjusted to obtain a second deflection angle of each of the at least one phased array element; finally, after obtaining the second deflection angle of each of the at least one phased array element of the phased array, the at least one phased array element is spliced on the basis of the second deflection angle of the phased array element, to obtain the phased array. In this way, the phased arrayed surface spliced according to the second deflection angle approaches a virtual spherical surface, as shown in Fig. 5, leading to more uniform transmission gains across all scanning angles within the first field of view.

To facilitate understanding of the method for processing a phased array element provided in the embodiments of the present disclosure, the following describes the method with reference to specific embodiments.

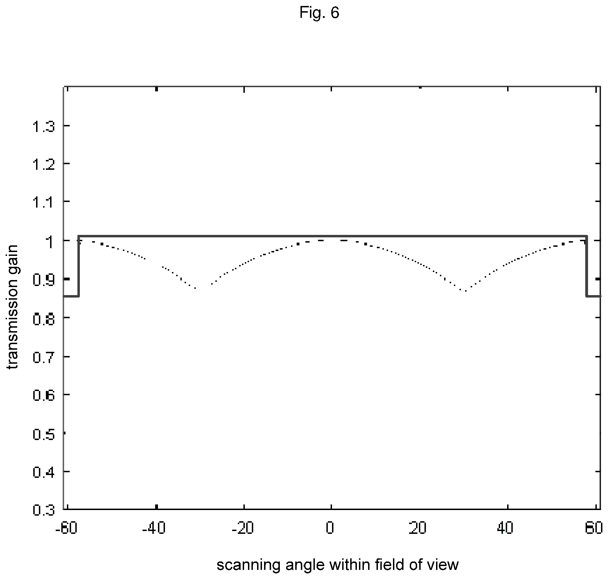

Exemplarily, assuming that the communication distance between the first laser communication terminal and the second laser communication terminal is 500 km at this time, the first field of view of the phased array is $\pm 61°$ in the X direction and $\pm 20°$ in the Y direction; the beam deflection range corresponding to the phased array element composed of MEMS is $\pm 15°$ in both the X direction and the Y direction, and then the field of view corresponding to an original phased array is $\pm 30°$ in the X direction and $\pm 30°$ in the Y direction, the original phased array is composed of 12*12 phased array elements, and it may be determined through experiments that: in order to achieve a field of view of 122° in the X direction, array elements need to be expanded, and in a case where phased arrays having different fields of view are directly spliced, three phased arrays are needed, totally including 36*12 phased array elements. The deflection angles for each phased array element in the X direction are [-60,-60,-60,-60,-60,-60,-60,-60,-60,-60,-60,-60,0,0,0,0,0,0,0,0,0,0,0,0,60,60,60,60,60,60,60,60,60,60,60,60]; then the second field of view for the first 12 phased array elements is -90° to -30°, and the second field of view for the middle 12 phased array elements is -30° to 30°, and the second field of view for the last 12 phased array elements is 30° to 90°; and the transmission gain across all scanning angles within the first field of view is shown by the dashed line in Fig. 6, it clearly shows that the transmission gains across all scanning angles are not consistent, especially at the junctions of three phased arrays, i.e., at the scanning angles of -30° and 30°, the transmission gains are significantly decreased.

In order to achieve a field of view of 122° in the X direction, array elements need to be expanded, and only 34*12 phased array elements are needed in a case where the splicing is performed according to the method for processing a phased array element provided in the embodiments of the present disclosure; the deflection angles for each phased array element in the X direction are [-82.5,-77.5,-72.5,-67.5,-62.5,-57.5,-52.5,-47.5,-42.5,-37.5,-32.5,-27.5,-17.5,-12.5,-7.5,-2.5,2.5,7.5,12.5,-17.5,22.5,27.5,32.5,37.5,42.5,47.5,52.5,57.5,62.5,67.5,72.5,77.5,82.5]; and the transmission gain across all scanning angles within the first field of view is shown by the solid line in Fig. 6; it clearly shows that in a case where the splicing is performed according to the method for processing a phased array element provided in the embodiments of the present disclosure, the transmission gains across all scanning angles become more uniform and higher than the transmission gains in direct splicing.

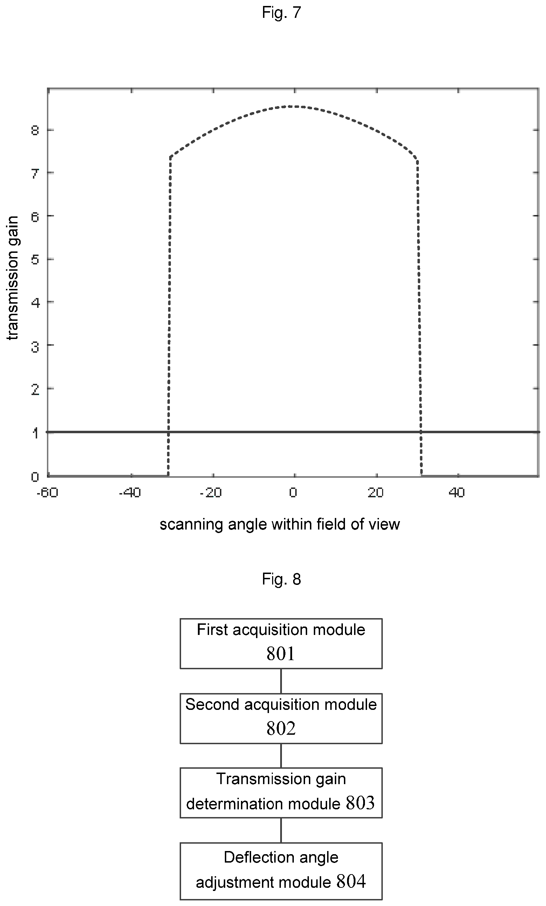

In one or more embodiments, as shown by the dashed line in Fig. 7, generally a longer communication distance requires a higher transmission gain and a smaller field of view, while as shown by the solid line in Fig. 7, a shorter communication distance requires a lower transmission gain and a larger field of view. Therefore, in a case where the communication distance between the first laser communication terminal and the second laser communication terminal is smaller than a preset threshold, the first laser communication terminal and the second laser communication terminal are in near-field communication, and after the splicing of the phased array elements are completed by adjusting the deflection angles of the phased array elements, in a case where the first laser communication terminal needs to communicate with a third laser communication terminal and the communication distance between the first laser communication terminal and the third laser communication terminal is larger than the preset threshold, the communication is changed from the near-field communication to a far-field communication, the deflection angles of the phased array elements of the first laser communication terminal are re-adjusted on the basis of communication configuration data corresponding to the communication distance between the first laser communication terminal and the third laser communication terminal, and the phased array elements are spliced on the basis of the re-adjusted deflection angles.

Based on the above description, in the embodiments of the present disclosure, determining communication configuration data of a phased array, which corresponds to a communication distance between the first laser communication terminal and the second laser communication terminal, on the basis of a corresponding relationship between the communication distance and the communication configuration data of the phased array; determining a transmission gain of the phased array on the basis of the communication configuration data of the phased array and the first deflection angle of each of the at least one phased array element; and adjusting the first deflection angle of each of the at least one phased array element on the basis of a result of comparing the transmission gain of the phased array with a preset transmission gain threshold in the communication configuration data, to obtain a second deflection angle of each of the at least one phased array element.

Thus, by adjusting the deflection angles of the phased array elements, instead of directly splicing a plurality of phased arrays having different fields of view, the present disclosure not only reduces the number of phased array elements to be used but also enables continuous adjustment of the deflection angles, allowing the transmission gain and the field of view of the phased arrays to achieve an optimal effect, thereby avoiding the problem that the transmission gain is obviously lower than a preset transmission gain threshold of the phased arrays at the junctions in a case where a plurality of phased arrays are directly spliced.

Based on the same inventive concept, the embodiments of the present disclosure further provide an apparatus for processing a phased array element. As shown in Fig. 8, the apparatus is provided in a first laser communication terminal, the first laser communication terminal includes a phased array formed by at least one phased array element, and the first laser communication terminal is configured to communicate with a second laser communication terminal. The apparatus includes: a first acquisition module 801, configured to determine communication configuration data of the phased array, which corresponds to a communication distance between the first laser communication terminal and the second laser communication terminal, on the basis of a corresponding relationship between the communication distance and the communication configuration data of the phased array; a second acquisition module 802, configured to acquire a first deflection angle of each of the at least one phased array element; a transmission gain determination module 803, configured to determine a transmission gain of the phased array on the basis of the communication configuration data of the phased array and the first deflection angle of each of the at least one phased array element; and a deflection angle adjustment module 804, configured to adjust the first deflection angle of each of the at least one phased array element on the basis of a result of comparing the transmission gain of the phased array with a preset transmission gain threshold in the communication configuration data, to obtain a second deflection angle of each of the at least one phased array element.

In one or more embodiments, the communication configuration data includes a first field of view of the phased array; the first field of view represents a scanning range of the phased array; the scanning range includes a plurality of scanning angles.

The transmission gain determination module 803 is specifically configured to: for any one scanning angle of the plurality of scanning angles: determine a transmission gain of the phased array on the basis of the communication configuration data of the phased array and the first deflection angle of each of the at least one phased array element.

In one or more embodiments, the deflection angle adjustment module 804 is specifically configured to: for any one scanning angle of the plurality of scanning angles: in a case where the transmission gain of the phased array is less than the preset transmission gain threshold, for each phased array element of the at least one phased array element, adjust the first deflection angle of the phased array element according to a preset adjustment policy to obtain the second deflection angle of the phased array element; the preset transmission gain threshold corresponds to the first field of view; and in a case where the transmission gain of the phased array is not less than the preset transmission gain threshold, for each phased array element of the at least one phased array element, take the first deflection angle of the phased array element as the second deflection angle of the phased array element.

In one or more embodiments, the communication configuration data further includes a beam deflection range of each of the at least one phased array element, a transmission efficiency of the phased array, a number of phased array elements, and a communication wavelength of the phased array; the transmission gain determination module 803 is specifically configured to: for each phased array element of the at least one phased array element, determine a second field of view of the phased array element on the basis of the beam deflection range of the phased array element and the first deflection angle of the phased array element; the second field of view of the phased array element represents a scanning range of the phased array element; for each phased array element of the at least one phased array element, determine an effective area of the phased array element on the basis of the scanning angle and the second field of view of the phased array element; and determine the transmission gain of the phased array on the basis of the transmission efficiency of the phased array, the number of the phased array elements, the communication wavelength of the phased array, and the effective area of each of the at least one phased array element.

In one or more embodiments, the communication configuration data further includes a beam incident angle of each of the at least one phased array element; the transmission gain determination module 803 is specifically configured such that: the step of for each phased array element of the at least one phased array element, determining an effective area of the phased array element on the basis of the scanning angle and the second field of view of the phased array element includes: for any one phased array element of the at least one phased array element: in a case where the scanning angle is not within the second field of view of the phased array element, determining the effective area of the phased array element to a preset value; in a case where the scanning angle is within the second field of view of the phased array element, a beam incident angle of the phased array element is acquired; and determining the effective area of the phased array element on the basis of the scanning angle, the beam incident angle of the phased array element, and the first deflection angle of the phased array element.

In one or more embodiments, the communication configuration data further includes an area of each of the at least one phased array element; the transmission gain determination module 803 is specifically configured such that:

$$S_n = S * \cos\left(\frac{(\theta_x - d\theta_{x\_n})}{2} + \theta_{sx}\right) * \cos\left(\frac{(\theta_y - d\theta_{y\_n})}{2} + \theta_{sy}\right).$$

Wherein $S_n$ is the effective area of the phased array element; S is the area of the phased array element; $\theta_x$ is a scanning angle in an X direction, $\theta_y$, is a scanning angle in a Y direction; $d\theta_{x\_n}$ is a first deflection angle of the phased array element in the X direction, $d\theta_{x\_n}$ is a first deflection angle of the phased array element in the Y direction; and $\theta_{sx}$ is a beam incident angle of the phased array element in the X direction, $\theta_{sy}$ is a beam incident angle of the phased array element in the Y direction.

In one or more embodiments, the apparatus further includes an initial deflection angle determination module configured to, before the step of determining a transmission gain of the phased array on the basis of the communication configuration data of the phased array and the first deflection angle of each of the at least one phased array element, determine an initial deflection angle of each of the at least one phased array element on the basis of the first field of view and a number of the at least one phased array element; the initial deflection angle is taken as a first deflection angle for a first adjustment.

In one or more embodiments, the initial deflection angle determination module is further configured to: acquire a preset tolerance value in the communication configuration data; and equally divide the scanning range on the basis of the number of the at least one phased array element and the preset tolerance value, to obtain the initial deflection angle of each of the at least one phased array element.

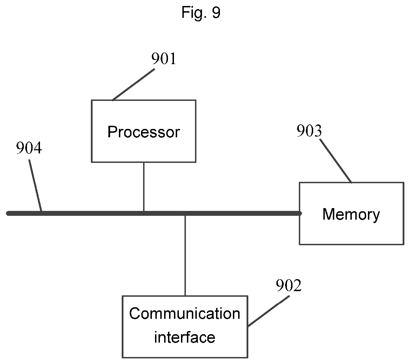

Based on the same inventive concept as the embodiments of the present disclosure, the embodiments of the present disclosure provide an electronic device as shown in Fig. 9. As shown in Fig. 9, the electronic device includes: a processor 901, a communication interface 902, a memory 903 and a communication bus 904, wherein the processor 901, the communication interface 902 and the memory 903 complete communication with each other via the communication bus 904.

The memory 903 stores a computer program which, when executed by the processor 901, causes the processor 901 to execute the method for processing a phased array element provided in the present disclosure.

The communication bus mentioned in the electronic device may be a Peripheral Component Interconnect (PCI) bus, or an Extended Industry Standard Architecture (EISA) bus, or the like. The communication bus may be classified into an address bus, a data bus, a control bus, and the like. For ease of representation, only one bold line is shown in Fig. 9, which does not mean there is only one bus or one type of bus. The communication interface 902 is configured for communication between the electronic device and another device. The memory may include a Random Access Memory (RAM), and may also include a Non-Volatile Memory (NVM), for example, at least one disk memory. Optionally, the memory may also be at least one storage means located remotely from the described processor. The processor may be a general purpose processor, including a central processing unit, a Network Processor (NP), or the like, and may also be a Digital Signal Processing (DSP), an application-specific integrated circuit, a field programmable gate array or another programmable logic device, a discrete gate or transistor logic device, a discrete hardware component, or the like.

On the basis of the described embodiments, the present disclosure further provides a computer-readable storage medium, for example, a memory including instructions which may be executed by a processor to complete the method for processing a phased array element. Optionally, the storage medium may be a non-transitory computer-readable storage medium. For example, the non-transitory computer-readable storage medium may be a ROM, a Random Access Memory (RAM), a CD-ROM, a magnetic tape, a floppy disk, an optical data storage device, or the like.

As the computer-readable medium provided above solves the problem in a similar principle to the method for processing a phased array element, for the steps implemented after the processor executes the computer program in the computer-readable medium, reference may be made to the described embodiments, and details are not repeatedly described herein.

On the basis of the described embodiments, the present disclosure further provides a computer program product, including a computer program which, when executed by a processor, implements any method for processing a phased array element provided in the present disclosure.

Those skilled in the art shall understand that the embodiments of the present disclosure may be provided as a method, a system or a computer program product. Therefore, the present disclosure may take the form of an entirely hardware embodiment, an entirely software embodiment or an embodiment combining software and hardware aspects. Furthermore, the present disclosure may take the form of a computer program product implemented on one or more computer-usable storage media (including but not limited to a disk memory, a CD-ROM, an optical memory, and the like) containing computer-usable program codes.

The present disclosure is described with reference to the flowcharts and/or block diagrams of the method, device (system), and computer program product according to the present disclosure. It should be understood that each flow and/or block in the flowcharts and/or block diagrams and combinations of flows and/or blocks in the flowcharts and/or block diagrams can be implemented by computer program instructions. These computer program instructions may be provided to a processor of a general purpose computer, a special purpose computer, an embedded processor or other programmable data processing device to produce a machine, such that the instructions executed by the processor of the computer or other programmable data processing device generate a means for implementing the functions specified in one or more flows in the flowcharts and/or one or more blocks in the block diagrams.

These computer program instructions may also be stored in a computer-readable memory capable of guiding a computer or other programmable data processing device to work in a specific manner, such that the instructions stored in the computer-readable memory generate a manufactured product including an instruction means, and the instruction means implements the functions specified in one or more flows in the flowcharts and/or one or more blocks in the block diagrams.

These computer program instructions may also be loaded onto a computer or other programmable data processing device, causing a series of operational steps to be performed on the computer or other programmable device to produce computer implemented processing, such that the instructions executed on the computer or other programmable device provide steps for implementing the functions specified in one or more flows in the flowcharts and/or one or more blocks in the block diagrams.

Obviously, those skilled in the art may make various modifications and variations to the present disclosure without departing from the spirit and scope of the present disclosure. These modifications and variations of the present disclosure belong to the scope of the claims of the present disclosure and their equivalents.

## Claims

1. A method for processing a phased array element, applied to a first laser communication terminal, the first laser communication terminal comprises a phased array formed by at least one phased array element, and the first laser communication terminal is configured to communicate with a second laser communication terminal, the method comprising:

   determining communication configuration data of the phased array, which corresponds to a communication distance between the first laser communication terminal and the second laser communication terminal, on the basis of a corresponding relationship between the communication distance and the communication configuration data of the phased array; acquiring a first deflection angle of each of the at least one phased array element; determining a transmission gain of the phased array on the basis of the communication configuration data of the phased array and the first deflection angle of each of the at least one phased array element; and adjusting the first deflection angle of each of the at least one phased array element on the basis of a result of comparing the transmission gain of the phased array with a preset transmission gain threshold in the communication configuration data, to obtain a second deflection angle of each of the at least one phased array element.

2. The method according to claim 1, wherein the communication configuration data comprises a first field of view of the phased array; the first field of view represents a scanning range of the phased array; the scanning range comprises a plurality of scanning angles;
   the determining a transmission gain of the phased array on the basis of the communication configuration data of the phased array and the first deflection angle of each of the at least one phased array element comprises:
   for any one scanning angle of the plurality of scanning angles: determining a transmission gain of the phased array on the basis of the communication configuration data of the phased array and the first deflection angle of each of the at least one phased array element.

3. The method according to claim 2, wherein the adjusting the first deflection angle of each of the at least one phased array element on the basis of a result of comparing the transmission gain of the phased array with a preset transmission gain threshold in the communication configuration data, to obtain a second deflection angle of each of the at least one phased array element comprises:
   for any one scanning angle of the plurality of scanning angles:

   in a case where the transmission gain of the phased array is less than the preset transmission gain threshold, for each phased array element of the at least one phased array element, adjusting the first deflection angle of the phased array element according to a preset adjustment policy to obtain the second deflection angle of the phased array element; the preset transmission gain threshold corresponds to the first field of view; and
   in a case where the transmission gain of the phased array is not less than the preset transmission gain threshold, for each phased array element of the at least one phased array element, taking the first deflection angle of the phased array element as the second deflection angle of the phased array element.

4. The method according to claim 2, wherein the communication configuration data further comprises a beam deflection range of each of the at least one phased array element, a transmission efficiency of the phased array, a number of phased array elements, and a communication wavelength of the phased array;
the determining a transmission gain of the phased array on the basis of the communication configuration data of the phased array and the first deflection angle of each of the at least one phased array element comprises:

for each phased array element of the at least one phased array element, determining a second field of view of the phased array element on the basis of the beam deflection range of the phased array element and the first deflection angle of the phased array element; the second field of view of the phased array element represents a scanning range of the phased array element;
for each phased array element of the at least one phased array element, determining an effective area of the phased array element on the basis of the scanning angle and the second field of view of the phased array element; and
determining the transmission gain of the phased array on the basis of the transmission efficiency of the phased array, the number of the phased array elements, the communication wavelength of the phased array, and the effective area of each of the at least one phased array element.

5. The method according to claim 4, wherein the communication configuration data further comprises a beam incident angle of each of the at least one phased array element;
for each phased array element of the at least one phased array element, the determining an effective area of the phased array element on the basis of the scanning angle and the second field of view of the phased array element comprises:
for any one phased array element of the at least one phased array element:

in a case where the scanning angle is not within the second field of view of the phased array element, determining the effective area of the phased array element to a preset value;
in a case where the scanning angle is within the second field of view of the phased array element, acquiring a beam incident angle of the phased array element; and determining the effective area of the phased array element on the basis of the scanning angle, the beam incident angle of the phased array element, and the first deflection angle of the phased array element.

6. The method according to claim 5, wherein the communication configuration data further comprises an area of each of the at least one phased array element;

the determining an effective area of the phased array element on the basis of the scanning angle, the beam incident angle of the phased array element, and the first deflection angle of the phased array element comprises:

$$S_n = S * \cos\left(\frac{(\theta_x - d\theta_{x\_n})}{2} + \theta_{sx}\right) * \cos\left(\frac{(\theta_y - d\theta_{y\_n})}{2} + \theta_{sy}\right)$$

wherein $S_n$ is the effective area of the phased array element; S is the area of the phased array element; $\theta_x$ is a scanning angle in an X direction, $\theta_y$ is a scanning angle in a Y direction; $d\theta_{x\_n}$ is a first deflection angle of the phased array element in the X direction, $d\theta_{x\_n}$ is a first deflection angle of the phased array element in the Y direction; and $\theta_{sx}$ is a beam incident angle of the phased array element in the X direction, $\theta_{sy}$ is a beam incident angle of the phased array element in the Y direction.

7. The method according to claim 2, wherein before the determining a transmission gain of the phased array on the basis of the communication configuration data of the phased array and the first deflection angle of each of the at least one phased array element, the method further comprises:

determining an initial deflection angle of each of the at least one phased array element on the basis of the first field of view and a number of the at least one phased array element; and
taking the initial deflection angle as a first deflection angle for a first adjustment.

8. The method according to claim 7, wherein the determining an initial deflection angle of each of the at least one phased array element on the basis of the first field of view and a number of the at least one phased array element comprises:

acquiring a preset tolerance value in the communication configuration data; and
equally dividing the scanning range on the basis of the number of the at least one phased array element and the preset tolerance value, to obtain the initial deflection angle of each of the at least one phased array element.

9. An apparatus for processing a phased array element, provided in a first laser communication terminal, the first laser communication terminal comprises a phased array formed by at least one phased array element, and the first laser communication terminal is configured to communicate with a second laser communication terminal, the apparatus comprising:

a first acquisition module, configured to determine communication configuration data of the phased array, which corresponds to a communication distance between the first laser communication terminal and the second laser communication terminal, on the basis of a corresponding relationship between the communication distance and the communication configuration data of the phased array;
a second acquisition module, configured to acquire a first deflection angle of each of the at least one phased array element;
a transmission gain determination module, configured to determine a transmission gain of the phased array on the basis of the communication configuration data of the phased array and the first deflection angle of each of the at least one phased array element; and
a deflection angle adjustment module, configured to adjust the first deflection angle of each of the at least one phased array element on the basis of a result of comparing the transmission gain of the phased array with a preset transmission gain threshold in the communication configuration data, to obtain a second deflection angle of each of the at least one phased array element.

10. An electronic device, comprising:

a memory and a processor;
the memory is configured to store a program instruction; and
the processor is configured to invoke the program instruction stored in the memory, and execute the method for processing a phased array element according to any one of claims 1-8 according to the program instruction.

11. A computer-readable storage medium, wherein the computer-readable storage medium stores a computer instruction which, when executed on a computer, causes the computer to execute the method for processing a phased array element according to any one of claims 1-8.

Fig. 1

Fig. 2

| Detector 3 | | Detector 1 | | Detector 2 | | | |

Signal light source ┄┄> Delay line array ┄┄> Phase shifter array 1 <── Phase shifter array 2 <── Collimator lens array ┄┄> MEMS array

Fig. 3

determining communication configuration data of a phased array, which corresponds to a communication distance between a first laser communication terminal and a second laser communication terminal, on the basis of a corresponding relationship between the communication distance and the communication configuration data of the phased array — 301

acquiring a first deflection angle of each of at least one phased array element — 302

determining a transmission gain of the phased array on the basis of the communication configuration data of the phased array and the first deflection angle of each of the at least one phased array element — 303

adjusting the first deflection angle of each of the at least one phased array element on the basis of a result of comparing the transmission gain of the phased array with a preset transmission gain threshold in the communication configuration data, to obtain a second deflection angle of each of the at least one phased array element — 304

Fig. 4

| for each phased array element of the at least one phased array element, determining a second field of view of the phased array element on the basis of the beam deflection range of the phased array element and the first deflection angle of the phased array element; the second field of view of the phased array element represents a scanning range of the phased array element | 401 |

| for each phased array element of the at least one phased array element, determining an effective area of the phased array element on the basis of a scanning angle and the second field of view of the phased array element | 402 |

| determining the transmission gain of the phased array on the basis of the transmission efficiency of the phased array, the number of the phased array elements, the communication wavelength of the phased array, and the effective area of each of the at least one phased array element | 403 |

Fig. 5

Fig. 6

Fig. 7

scanning angle within field of view

Fig. 8

First acquisition module
801

Second acquisition module
802

Transmission gain
determination module 803

Deflection angle
adjustment module 804

Fig. 9

## INTERNATIONAL SEARCH REPORT

| International application No. |
|---|
| **PCT/CN2024/127169** |

**A. CLASSIFICATION OF SUBJECT MATTER**

H04B 7/06(2006.01)i

According to International Patent Classification (IPC) or to both national classification and IPC

**B. FIELDS SEARCHED**

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI: 相控阵, 阵元, 拼接, 增益, 功率, 距离, 视场, 扫描, 范围, 调整, 改变, 偏转角, 角度, phased, array, gain, power, distance, field, view, scan, range, adjust, change, angle

**C. DOCUMENTS CONSIDERED TO BE RELEVANT**

| Category* | Citation of document, with indication, where appropriate, of the relevant passages | Relevant to claim No. |
|---|---|---|
| PX | CN 117579111 A (SHANGHAI SATELLITE INTERNET RESEARCH INSTITUTE CO., LTD.) 20 February 2024 (2024-02-20) description, paragraphs [0007]-[0051] | 1-11 |
| A | WO 2023273624 A1 (SOUTH CHINA UNIVERSITY OF TECHNOLOGY) 05 January 2023 (2023-01-05) description, paragraphs [0005]-[0020] | 1-11 |
| A | CN 114325643 A (XI'AN TECHNOLOGICAL UNIVERSITY) 12 April 2022 (2022-04-12) entire document | 1-11 |
| A | CN 114966717 A (LENG LEMENG) 30 August 2022 (2022-08-30) entire document | 1-11 |

☐ Further documents are listed in the continuation of Box C.       ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 January 2025** | **28 January 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/127169**

| Patent document cited in search report | | | Publication date (day/month/year) | Patent family member(s) | Publication date (day/month/year) |
|---|---|---|---|---|---|
| CN | 117579111 | A | 20 February 2024 | None | |
| WO | 2023273624 | A1 | 05 January 2023 | None | |
| CN | 114325643 | A | 12 April 2022 | None | |
| CN | 114966717 | A | 30 August 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311651708